(19) Europäisches Patentamt
European Patent Office
Office européen des brevets

(11) **EP 3 091 689 B1**

(12) **FASCICULE DE BREVET EUROPEEN**

(45) Date de publication et mention de la délivrance du brevet:
**21.03.2018 Bulletin 2018/12**

(51) Int Cl.:
*H04L 9/00* (2006.01)   *H04L 9/32* (2006.01)

(21) Numéro de dépôt: **16168407.1**

(22) Date de dépôt: **04.05.2016**

(54) **PROCÉDÉ DE GÉNÉRATION D'UNE SIGNATURE DE MESSAGE À PARTIR D'UN JETON DE SIGNATURE CHIFFRÉ À L'AIDE D'UNE FONCTION DE CHIFFREMENT HOMOMORPHIQUE**

VERFAHREN ZUR ERZEUGUNG EINER SIGNATUR VON EINER NACHRICHT MIT EINEM CHIFFRIERTEN SIGNATURTOKEN MITHILFE EINER HOMOMORPHEN CHIFFRIERFUNKTION

METHOD FOR GENERATING A MESSAGE SIGNATURE FROM A SIGNATURE TOKEN ENCRYPTED BY MEANS OF AN HOMOMORPHIC ENCRYPTION FUNCTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.05.2015 FR 1554077**

(43) Date de publication de la demande:
**09.11.2016 Bulletin 2016/45**

(73) Titulaire: **Idemia Identity & Security France 92130 Issy-les-Moulineaux (FR)**

(72) Inventeurs:
• **CHABANNE, Hervé**
  **92130 ISSY-LES-MOULINEAUX (FR)**
• **MOREL, Constance**
  **92130 ISSY LES MOULINEAUX (FR)**
• **CLÉMOT, Olivier**
  **92130 ISSY LES MOULINEAUX (FR)**
• **BRINGER, Julien**
  **92130 ISSY-LES-MOULINEAUX (FR)**

(74) Mandataire: **Regimbeau**
  **20, rue de Chazelles**
  **75847 Paris Cedex 17 (FR)**

(56) Documents cités:
**EP-A2- 0 807 908**

• **GENNARO ROSARIO ET AL: "Non-interactive Verifiable Computing: Outsourcing Computation to Untrusted Workers", 15 août 2010 (2010-08-15), CORRECT SYSTEM DESIGN; [LECTURE NOTES IN COMPUTER SCIENCE; LECT.NOTES COMPUTER], SPRINGER INTERNATIONAL PUBLISHING, CHAM, PAGE(S) 465 - 482, XP047270472, ISSN: 0302-9743 ISBN: 978-3-642-22877-3 * Introduction Passage Our contribution, page 467 section 4 ***
• **DARREL HANKERSON ET AL: "GUIDE TO ELLIPTIC CURVE CRYPTOGRAPHY", GUIDE TO ELLIPTIC CURVE CRYPTOGRAPHY, SPRINGER, 1 janvier 2004 (2004-01-01), pages 1-332, XP008139881, ISBN: 978-0-387-95273-4**
• **PAILLER P ED - STERN J (ED): "PUBLIC-KEY CRYPTOSYSTEMS BASED ON COMPOSITE DEGREE RESIDUOSITY CLASSES", 1 janvier 1999 (1999-01-01), ADVANCES IN CRYPTOLOGY - EUROCRYPT '99. INTERNATIONAL CONF. ON THE THEORY AND APPLICATION OF CRYPTOGRAPHIC TECHNIQUES. PRAGUE, CZ, MAY 2 - 6, 1999 PROCEEDINGS; [LECTURE NOTES IN COMPUTER SCIENCE], BERLIN : SPRINGER, DE, PAGE(S) 223 - 238, XP000830710, ISBN: 978-3-540-65889-4 * section 8 * * le document en entier ***

- **BENOIT CHEVALLIER-MAMES ED - JOHN IOANNIDIS ET AL: "New Signature Schemes with Coupons and Tight Reduction", 19 mai 2005 (2005-05-19), APPLIED CRYPTOGRAPHY AND NETWORK SECURITY; [LECTURE NOTES IN COMPUTER SCIENCE;;LNCS], SPRINGER-VERLAG, BERLIN/HEIDELBERG, PAGE(S) 513 - 528, XP019010624, ISBN: 978-3-540-26223-7 * sections 2.1, 2.2 and 3.1 ***

## Description

DOMAINE DE L'INVENTION

La présente invention concerne de façon générale la génération d'une signature numérique d'un message.

L'invention concerne plus précisément un procédé de signature à jetons basé sur un algorithme de signature numérique.

ETAT DE LA TECHNIQUE

De nombreux procédés de signature numérique sont utilisés couramment en cryptographie pour générer, pour un message numérique, une signature garantissant l'identité de l'émetteur de ce message.

Afin de garantir un niveau de sécurité élevé, ces procédés peuvent comprendre des opérations complexes nécessitant une capacité de calcul importante. Un tel besoin en puissance de calcul peut s'avérer problématique lors de la mise en oeuvre de tels procédés de signatures pour la signature de messages en temps réel, particulièrement lorsque ces procédés sont mis en oeuvre sur des systèmes disposant de ressources réduites, tels qu'une carte à puce.

Dans le but de diminuer la quantité de calculs à mettre en oeuvre lors de la signature, des procédés de signatures permettant de réaliser à l'avance une partie de ces calculs ont été développés. Dans cette catégorie de procédés de signature, les signatures à jeton ou à coupon prévoient le calcul, préalablement à la signature d'un message, d'un jeton indépendant de ce message, le stockage de ce jeton, et sa réutilisation lors de la signature d'un message pour calculer ladite signature. De tels procédés de signature permettent de déporter en amont de la signature les calculs les plus lourds et de restreindre au minimum les besoins en puissance de calcul lors de la génération de la signature elle-même. Un exemple d'un tel procédé de signature à jeton est exposé dans Benoit Chevallier-Mames, New signature schemes with coupons and tight reduction, Applied Cryptography and Network Security - ACNS 2005, volume 3531, Lecture Notes in Computer Science, pages 513-528. Springer-Verlag, 2005.

Parmi les nombreux procédés de signature existants, certains procédés nécessitant de réaliser des calculs lourds lors de la signature sont les procédés reposant sur l'algorithme DSA (« Digital Signature Algorithm ») ou l'algorithme ECDSA (« Elliptic Curve Digital Signature Algorithm ») à base de courbes elliptiques. A chaque signature d'un message, les procédés basés sur ces algorithmes comprennent respectivement le calcul d'une exponentiation $g^k$ avec k entier aléatoire ou des coordonnées d'un point d'une courbe elliptique en multipliant un générateur g d'une courbe elliptique par un entier aléatoire k. De tels calculs sont des opérations très couteuses, particulièrement pour un client léger tel qu'une carte à puce.

Malheureusement, un tel calcul ne peut pas être anticipé de manière sûre, comme dans le cas d'une signature à jeton. En effet, en cas de calcul préalable et de stockage d'un couple (k, abscisse (k*g)) ou (k, $g^k$ mod p), si un pirate parvenait à prendre connaissance de telles valeurs et d'une signature générée à partir de celles-ci selon l'algorithme DSA ou ECDSA, il pourrait obtenir des informations sur la clé privée du signataire. Ce pirate pourrait alors signer frauduleusement des messages au nom dudit signataire.

Il existe donc un besoin d'un procédé de signature permettant d'anticiper préalablement à la signature d'un message les calculs les plus couteux tels que la détermination d'un point de courbe elliptique, sans mettre en péril la sécurité du mécanisme de signature.
Gennaro et al, Non-interactive Verifiable Computing: Outsorucing Computation to Untrusted Workers, 2010-08-15, Correct System Design, Springer International Publishing, Cham, pages 465-482 décrit la notion de calcul vérifiable. Hankerson et al, Guide to Elliptic Curve Cryptography, Springer, 2044-01-01, pages 1-332 décrit la cryptographie par courbe elliptique. EP0807908A2 décrit une méthode de génération de signatures numériques.

RESUME DE L'INVENTION

A cet effet, la présente invention se rapporte ainsi selon un premier aspect à un procédé de génération d'une signature d'un message destinée à être validée par un serveur vérifieur, le protocole de signature mis en oeuvre pour la génération de la signature comprenant des paramètres publics ($G_r$, n, g) tels que g est un élément du groupe $G_r$ d'ordre n avec n un entier premier, un dispositif client étant configuré pour détenir une clé privée et une clé publique correspondante,
ledit procédé étant caractérisé en ce qu'il comprend des étapes de :

- calcul préalablement hors ligne par un module matériel de sécurité d'un jeton de signature comprenant une première partie de jeton de signature φ(r) et d'une deuxième partie de jeton de signature φ(1/k), dans lequel k est un entier aléatoire compris entre 1 et n-1, et r est un entier intermédiaire défini par r=f($g^k$)

où f est une fonction à valeurs dans $\mathbb{Z}_n$, et la première partie de jeton de signature φ(r) est générée en chiffrant l'entier intermédiaire r à l'aide de ladite fonction de chiffrement homomorphique (φ) et la deuxième partie de jeton de signature φ(1/k) est générée en chiffrant l'inverse de l'aléa 1/k à l'aide de ladite fonction de chiffrement homomorphique (φ),
- stockage dudit jeton de signature;
- génération de ladite signature dudit message chiffrée à l'aide de ladite fonction de chiffrement homomorphique à partir du résultat du chiffrement par ladite fonction de chiffrement homomorphique de la clé privée stockée par le dispositif client, du jeton de signature et dudit message, ladite signature étant destinée à être validée par ledit serveur vérifieur à l'aide de ladite clé publique.

Les étapes lourdes du calcul de la signature peuvent ainsi être réalisées à l'avance, sans compromission de la sécurité grâce au chiffrement du jeton servant à stocker le résultat de ces calculs. Le calcul de la signature peut également être délégué par le dispositif client à un autre dispositif sans que celui-ci ait besoin de connaitre ni le message à signer, ni le jeton déchiffré, ni la clé privée du client de façon à ne pas mettre en péril la sécurité du mécanisme de signature.

Avantageusement, mais facultativement, les étapes de génération de l'aléa k et de calcul de l'entier intermédiaire sont également mises en oeuvre préalablement hors ligne par le module matériel de sécurité.

Dans le cas d'une mise en oeuvre selon le protocole ECDSA, le groupe $G_r$ est le groupe comprenant l'ensemble des points d'une courbe elliptique muni de l'addition, la clé publique y et la clé privée d peuvent vérifier y = d*g, g étant un point d'une courbe elliptique d'ordre n un entier premier, et le procédé de génération d'une signature selon le premier aspect peut également comprendre la mise en oeuvre préalablement hors ligne par ledit module matériel de sécurité des étapes de :

- génération d'un aléa k entier appartenant à [1;n-1] ;
- calcul de l'entier intermédiaire abscisse du point de la courbe elliptique k*g modulo n;

ledit jeton de signature comprenant une première partie de jeton de signature générée en chiffrant l'entier intermédiaire calculé à l'aide de ladite fonction de chiffrement homomorphique et une deuxième partie de jeton de signature générée en chiffrant l'inverse de l'aléa à l'aide de ladite fonction de chiffrement homomorphique.

Dans le cas d'une mise en oeuvre selon le protocole DSA, le groupe $G_r$ est l'ensemble $\mathbb{Z}_p$ muni de la multiplication, où p est un nombre entier premier tel que (p-1) est un multiple de n, la clé publique y et la clé privée d telle que 0<d<q vérifient y = $g^d$ mod p, n étant un nombre premier, g = $h^{((p-1)/n)}$ mod p avec h un entier aléatoire vérifiant 1 <h<p-1 et g différent de 1, et le procédé de génération d'une signature selon le premier aspect peut également comprendre la mise en oeuvre préalablement hors ligne par ledit module matériel de sécurité des étapes de :

- génération d'un aléa k entier appartenant à [1;n-1] ;
- calcul de l'entier intermédiaire r = ($g^k$ mod p) mod n;

ledit jeton de signature comprenant une première partie de jeton de signature générée en chiffrant l'entier intermédiaire calculé à l'aide de ladite fonction de chiffrement homomorphique et une deuxième partie de jeton de signature générée en chiffrant l'inverse de l'aléa à l'aide de ladite fonction de chiffrement homomorphique.

Dans un premier mode de mise en oeuvre, la signature du message m chiffrée à l'aide de ladite fonction de chiffrement homomorphique φ peut comprendre une première partie de signature chiffrée à l'aide de ladite fonction de chiffrement homomorphique et générée à l'aide de la formule : φ(s) = φ((1/k)*(z+d.r)) et une deuxième partie de signature chiffrée à l'aide de ladite fonction de chiffrement homomorphique égale à φ(r), avec 1/k l'inverse de l'aléa, z fonction du message m, d la clé privée stockée par le dispositif client, r l'entier intermédiaire calculé et φ la fonction de chiffrement homomorphique.

Le client peut ainsi déléguer le calcul de la première partie de signature directement sous forme chiffrée uniquement à partir de φ(d), du message et du jeton chiffré sans déchiffrer des éléments servant à son calcul. Le dispositif client n'a ainsi à calculer que φ(d) au minimum réduisant ainsi davantage le cout de génération de la signature pour celui-ci.

Dans un deuxième mode de mise en oeuvre, le jeton de signature peut comprendre en outre le résultat du chiffrement par ladite fonction de chiffrement homomorphique du produit de l'entier intermédiaire calculé avec l'inverse de l'aléa.

Dans ce deuxième mode de mise en oeuvre, la signature du message m chiffrée à l'aide de ladite fonction de chiffrement homomorphique peut comprendre une première partie de signature chiffrée à l'aide de ladite fonction de chiffrement homomorphique et générée à l'aide de la formule : φ(s) = φ((1/k).z + d.(r.1/k)) et une deuxième partie de signature chiffrée à l'aide de ladite fonction de chiffrement homomorphique égale à φ(r), avec 1/k l'inverse de l'aléa, z fonction du message m, d la clé privée stockée par le dispositif client, r l'entier intermédiaire calculé, r.1/k le produit de l'entier intermédiaire calculé avec l'inverse de l'aléa et φ la fonction de chiffrement homomorphique.

La signature peut ainsi être calculée sans avoir à calculer une multiplication homomorphique d'ordre 2, réduisant ainsi davantage le cout de génération de la signature.

La présente invention se rapporte selon un deuxième aspect à un produit programme d'ordinateur comprenant des instructions de code de programme pour l'exécution des étapes du procédé selon le premier aspect lorsque ledit programme est exécuté sur un ordinateur.

La présente invention se rapporte selon un troisième aspect à un système de génération d'une signature d'un message destinée à être validée par un serveur vérifieur,

un dispositif client étant configuré pour détenir une clé privée et une clé publique correspondante, ledit système comprenant :

- un module matériel de sécurité configuré pour calculer préalablement hors ligne un jeton de signature résultat d'un chiffrement à l'aide d'une fonction de chiffrement homomorphique,
- un dispositif de stockage dudit jeton de signature,
- un serveur intermédiaire ou ledit module matériel de sécurité configuré pour générer ladite signature dudit message chiffrée à l'aide de ladite fonction de chiffrement homomorphique à partir du résultat du chiffrement par ladite fonction de chiffrement homomorphique de la clé privée stockée par le dispositif client, du jeton de signature et dudit message,
- un serveur vérifieur configuré pour valider ladite signature à l'aide de ladite clé publique.

Dans un mode de réalisation, l'invention concerne un procédé de génération d'une signature d'un message destinée à être validée par un serveur vérifieur, dans lequel le protocole mis en oeuvre pour la génération de la signature est le protocole DSA ou ECDSA, un dispositif client étant configuré pour détenir, une clé privée d et une clé publique y correspondante, où, dans le cas du protocole ECDSA, la clé publique et la clé privée vérifient y=d*g où g est un point d'une courbe elliptique d'ordre n premier, et dans le cas du protocole DSA, la clé privée d est telle que 0<d<n et vérifie avec la clé publique y=g$^d$ mod p, n étant un nombre premier, p étant un nombre premier vérifiant (p-1) est un multiple de n, g=h$^{((p-1)/n)}$ mod p avec h un entier aléatoire vérifiant 1 <h<p-1 et g différent de 1, ledit procédé étant caractérisé en ce qu'il comprend des étapes de :

- génération d'un aléa k entier appartenant [1 ;n-1]
- calcul d'un entier intermédiaire r, où r est l'abscisse du point de la courbe elliptique k*g modulo n dans le cas du protocole ECDSA et égal à (g$^k$ mod p) mod n dans le cas du protocole DSA,
- calcul préalablement hors ligne par un module matériel de sécurité d'un jeton de signature ($\varphi$(r), $\varphi$(1/k)) comprenant une première partie de jeton de signature $\varphi$(r) générée en chiffrant l'entier intermédiaire calculé r et d'une deuxième partie de jeton de signature $\varphi$(1/k), générée en chiffrant l'inverse de l'aléa 1/k à l'aide de ladite fonction de chiffrement homomorphique,
- stockage dudit jeton de signature ($\varphi$(r), $\varphi$(1/k)) ;
- génération de ladite signature (r,s) dudit message (m) chiffrée à l'aide de ladite fonction de chiffrement homomorphique ($\varphi$(r), $\varphi$(s)) à partir du résultat ($\varphi$(d)) du chiffrement par ladite fonction de chiffrement homomorphique de la clé privée stockée par le dispositif client d, du jeton de signature ($\varphi$(r), $\varphi$(1/k)) et dudit message, ladite signature étant destinée à être validée par ledit serveur vérifieur à l'aide de ladite clé publique y.

De tels produit programme d'ordinateur et système de génération de signature présentent les mêmes avantages que ceux évoqués pour le procédé selon le premier aspect.

DESCRIPTION DES FIGURES

D'autres caractéristiques et avantages ressortiront encore de la description qui suit, laquelle est purement illustrative et non limitative et doit être lue en regard des figures annexées, parmi lesquelles :

La figure 1 illustre schématiquement des moyens matériels dans un système de génération de signature selon un mode de réalisation de l'invention;
La figure 2 illustre un ordinogramme représentant une mise en oeuvre d'un procédé de génération d'une signature d'un message selon l'invention.

DESCRIPTION DETAILLEE D'AU MOINS UN MODE DE REALISATION

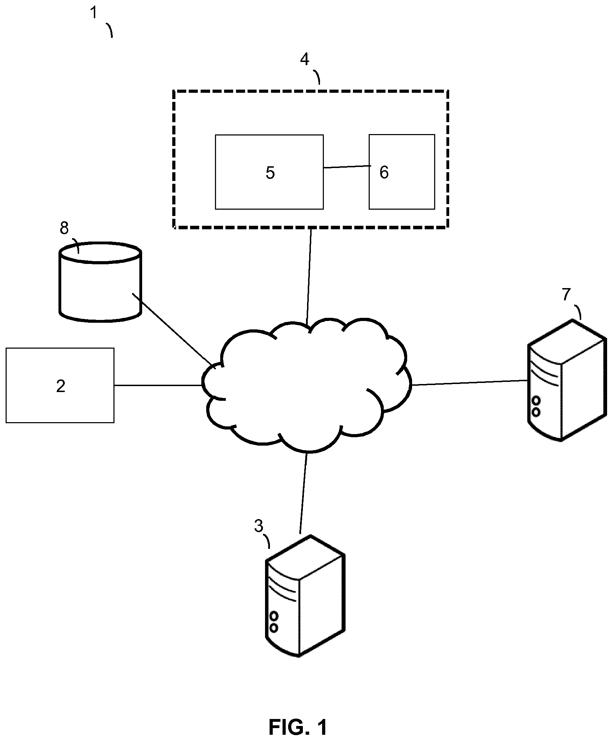

Un mode de mise en oeuvre concerne un procédé de génération d'une signature d'un message m mis en oeuvre par un système de génération de signature 1 illustré en **figure 1.** Un tel système de génération de signature peut comprendre un dispositif client 2 requérant la génération de la signature pour un message m à signer ainsi qu'un serveur vérifieur 3 destiné à valider la signature dudit message m.

Un tel système de génération de signature comprend en outre un module matériel de sécurité 4 destiné à mettre en oeuvre de manière sécurisée des étapes du calcul de la signature, notamment les étapes couteuses pouvant être mises en oeuvre indépendamment du message m. Ces calculs peuvent alors être réalisés à l'avance, en amont de la génération de la signature pour le dispositif client.

Un tel module matériel de sécurité peut être un HSM (« Hardware Security Module ») ou une carte à puce ou tout autre dispositif sécurisé doté de moyens de traitement tel qu'un ordinateur sécurisé par exemple un ordinateur isolé du monde extérieur. Un tel module matériel de sécurité 4 peut comprendre un générateur de nombres aléatoires 5 et un calculateur 6 et être configuré pour être relié au dispositif client.

Le dispositif client 2 ne comprend pas nécessairement d'importants moyens de calculs pour la mise en oeuvre des étapes de génération de la signature qui ne sont pas dévolues au module matériel de sécurité 4. Le système de génération de signature peut alors également comprendre un serveur intermédiaire 7 configuré pour être connecté au module matériel de sécurité 4, et auquel celui-ci peut déléguer des étapes de calcul. Une telle connexion peut être locale ou bien distante, par l'intermédiaire d'un réseau de communication tel qu'un réseau Ethernet ou le réseau Internet.

Le dispositif client 2 est configuré pour détenir une clé privée et la clé publique correspondante.

Le procédé propose de faire réaliser au module matériel de sécurité les étapes couteuses pouvant être mises en oeuvre indépendamment du message m à l'avance c'est-à-dire avant sa connaissance (hors ligne) et de stocker le résultat de ces calculs sous forme d'un jeton. Afin de garantir la sécurité du mécanisme de signature lors de la réutilisation de ce jeton pour calculer une signature pour le message m, l'invention propose de conserver ce jeton sous forme chiffrée. Afin d'empêcher qu'un pirate ne prenne connaissance de ce jeton, sans pour autant nécessiter de couteux calculs de déchiffrement lors du calcul de la signature, le jeton peut être chiffré à l'aide d'une fonction homomorphique. Une telle fonction permet de calculer à la volée (en ligne) une signature chiffrée à partir du jeton chiffré sans avoir à déchiffrer celui-ci. Le calcul d'une telle signature peut ainsi également être délégué par le dispositif client à un autre dispositif sans compromettre la sécurité du procédé de signature.

Le système de génération de signature peut également comprendre un dispositif de stockage 8 pour le stockage du jeton. Un tel dispositif de stockage peut être intégré au module matériel de sécurité ou bien indépendant et relié aux autres éléments du système de génération de signature par le biais d'un réseau de communication.

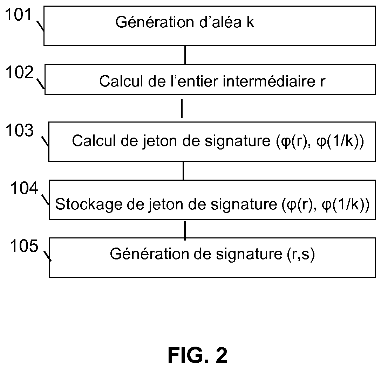

Une mise en oeuvre du procédé de génération d'une signature d'un message m peut ainsi comprendre comme illustré en **figure 2** des étapes de :

- calcul 103 préalablement hors ligne par le module matériel de sécurité 4 d'un jeton de signature ($\varphi(r)$, $\varphi(1/k)$) résultat d'un chiffrement à l'aide d'une fonction de chiffrement homomorphique $\varphi$,
- stockage 104 dudit jeton de signature $\varphi(r)$, $\varphi(1/k)$ ;
- génération 105 de ladite signature (r,s) dudit message m chiffrée à l'aide de ladite fonction de chiffrement homomorphique ($\varphi(r),\varphi(s)$) à partir du résultat du chiffrement par ladite fonction de chiffrement homomorphique de la clé privée stockée par le dispositif client, du jeton de signature ($\varphi(r),\varphi(1/k)$) et dudit message m, ladite signature étant destinée à être validée par ledit serveur vérifieur 3 à l'aide de ladite clé publique.

Cette étape de génération de signature peut être réalisée par le module matériel de sécurité 4 ou le serveur intermédiaire 7. Le calcul de signature est ainsi délégué au module matériel de sécurité ou à ce serveur intermédiaire ce qui permet de réduire les coûts des calculs réalisés par le dispositif client.

De plus, de par la propriété d'homomorphisme du chiffrement homomorphique, le serveur intermédiaire peut calculer la signature sans effectuer aucun déchiffrement et n'a donc pas nécessité d'être sûr pour ne pas mettre en péril la sécurité de la signature.

Pour rappel, une telle fonction homomorphique $\varphi$ est une fonction telle que, pour une opération de masquage M comme la multiplication par une donnée de masque a, il existe une opération O, comme l'exponentiation par a, telle que $O(\varphi(x))= \varphi(M(x))$, c'est-à-dire ($\varphi(x))^a = \varphi(x*a)$. Une telle fonction peut également être homomorphique entre deux opérations Op1 et Op2 si effectuer l'opération Op2 sur ($\varphi(x),\varphi(y)$) permet d'obtenir $\varphi$ (x Op1 y). On entendra par la suite par « multiplication homomorphique d'ordre 1 » une multiplication effectuée entre deux chiffrés n'ayant subi aucune multiplication auparavant et par « multiplication homomorphique d'ordre 2 » une multiplication effectuée entre un chiffré ayant déjà subi une multiplication et un chiffré ayant déjà subi au plus une multiplication.

Une paire de clés asymétriques de chiffrement (pk$\varphi$, sk$\varphi$) dédiées à la mise en oeuvre de l'algorithme de chiffrement homomorphique $\varphi$ peut être générée préalablement, par exemple par le module matériel de sécurité, par un autre module matériel de sécurité, par le dispositif client ou par le serveur vérifieur qui possède alors la clé privée sk$\varphi$. La clé publique pk$\varphi$ est partagée avec les autres éléments du système de génération de signature 1. Un tel algorithme peut par exemple être l'algorithme Paillier selon la référence suivante : Pascal Paillier, Public-key cryptosystems based on composite degree residuosity classes, EUROCRYPT 1999, 223-238. Cette référence propose un schéma additivement homomorphique. Celui-ci peut être transformé en schéma homomorphique pouvant évaluer des polynômes de degré 2 par application d'une méthode telle que la méthode de Catalano et Fiore présentée dans l'article Boosting linearly-homomorphic encryption to evaluate degree-2 functions on encrypted data, Cryptology ePrint Archive, 2014, p813. Un tel algorithme de chiffrement homomorphique peut également être un algorithme permettant d'effectuer un nombre limité d'additions et de multiplications sur les chiffrés à savoir un algorithme dit « Somewhat homomorphic encryption » (SHE). De tels algorithmes sont présentés dans l'article de Zvika Brakerski et Vinod Vaikuntanathan intitulé « Fully Homomorphic Encryption from Ring-LWE and Security for Key Dependent Messages » et l'article de Zvika Brakerski, Craig Gentry, and Vinod Vaikuntanathan intitulé « (Leveled) fully homomorphic encryption without bootstrapping » In ITCS, pages 309-325, 2012.

Le module matériel de sécurité 4 peut disposer de la clé privée de ladite paire de clés asymétriques de chiffrement sk$\varphi$ afin de déchiffrer les jetons de signature. Il peut également générer la clé privée sk$\varphi$, la transmettre au serveur vérifieur 3 et ne pas la conserver après cette transmission. En revanche le serveur intermédiaire ne possède pas cette clé privée, n'étant pas considéré comme sûr.

La signature peut à titre d'exemple être une signature générée selon le protocole DSA (« Digital Signature Algorithm ») ou le protocole ECDSA (« Elliptic Curve Digital Signature Algorithm ») détaillé ci-dessous.

Une mise en oeuvre du procédé de génération de signature selon l'invention peut comporter de manière plus détaillée les étapes décrites dans les paragraphes ci-dessous en référence à la **figure 2**.

Dans tous les cas les calculs sont mis en oeuvre dans un groupe $G_r$ muni d'une loi de composition interne notée o. En notant a un élément de ce groupe, on adopte la notation suivante :

$$a^m = a \circ ... \circ a$$

Où l'opération o est appliquée m fois, et m est un entier strictement positif.

On note en plus dans la suite g un élément du groupe d'ordre n, où n est un nombre premier. $G_r$, g et n sont les paramètres publics du protocole de signature.

Dans le cas d'une mise en oeuvre selon le protocole DSA la clé publique y et la clé privée d telle que 0<d<n peuvent vérifier y = $g^d$ mod p avec n un nombre premier, p un nombre premier vérifiant (p-1) est un multiple de n, g = $h^{((p-1)/n)}$ mod p, h étant un entier aléatoire vérifiant 1 <h<p-1 et g étant différent de 1. Ainsi construit, g est un élément d'ordre n du groupe $\mathbb{Z}_p$. Les éléments (p, n, g), sont les paramètres du protocole DSA.

Dans le cas d'une mise en oeuvre selon le protocole ECDSA la clé publique y et la clé privée d sélectionnée aléatoirement dans [1 ; n-1] avec n entier premier peuvent vérifier y = d*g, g étant un point d'une courbe elliptique d'ordre n. A titre d'exemple n peut être égal à 256 bits pour une sécurité de 128 bits.

Lors d'une étape de génération d'aléa 101, le générateur de nombres aléatoires 5 du module matériel de sécurité 4 peut générer préalablement hors ligne un aléa k entier appartenant à [1;n-1], que ce soit dans un mode de mise en oeuvre selon le protocole ECDSA ou selon le protocole DSA.

Puis lors de l'étape 102, le calculateur 6 du module matériel de sécurité calcule l'entier intermédiaire r=f($g^k$), où f est une fonction prenant en entrée un élément du groupe $G_r$ et à valeurs dans $\mathbb{Z}_n$, c'est-à-dire que f transforme un élément du groupe en un élément de $\mathbb{Z}_n$.

Dans le cas du protocole DSA, le groupe $G_r$ correspond au groupe multiplicatif $\mathbb{Z}_p$, c'est-à-dire que l'opération o est la multiplication, et p est le nombre premier introduit ci-dessous, et la fonction f est telle que f(x)=x mod n.

Dans le cas du protocole ECDSA, le groupe $G_r$ correspond à l'ensemble des points de la courbe elliptique munie de l'addition, c'est-à-dire que l'opération o est l'addition. Dans ce cas la fonction f est une fonction qui à un point x de la courbe associe son abscisse modulo n.

Ainsi, dans le cas d'une mise en oeuvre selon le protocole DSA ou ECDSA, le calculateur 6 du module matériel de sécurité 4 peut respectivement calculer, lors d'une étape de calcul d'entier 102, l'entier intermédiaire r = ($g^k$ mod p) mod n ou plus simplement r = $g^k$ mod n puisque $g^k$ est calculé dans le groupe multiplicatif $\mathbb{Z}_p$, ou bien un point de la courbe elliptique en calculant k*g (multiplication du point g de la courbe elliptique par le scalaire k) puis l'entier intermédiaire r correspondant à l'abscisse de ce point modulo n.

Un jeton de signature est ensuite calculé hors ligne, c'est-à-dire bien avant la connaissance du message m par le calculateur 6 du module matériel de sécurité 4 lors d'une étape de calcul de jeton de signature 103 et stocké dans le dispositif de stockage 8 lors d'une étape de stockage de jeton de signature 104. Un tel jeton peut être le résultat d'un chiffrement à l'aide de la fonction de chiffrement homomorphique φ. Un tel jeton de signature est ainsi stocké de manière sécurisée et permet la génération ultérieure en ligne de la signature du message m destinée à être validée par le serveur vérifieur à l'aide de la clé publique y. La délégation de ces étapes de calcul au module matériel de sécurité lors d'une étape préalable hors ligne permet de diminuer notablement le cout de génération d'une signature pour le dispositif client, et donc de calculer une signature pour un message particulier beaucoup plus rapidement.

Les étapes de génération d'aléa 101, de calcul de point 102 et de calcul de jeton de signature 103 peuvent être répétées afin de générer à l'avance et de stocker une multitude de jetons chiffrés, prêts à l'emploi pour le calcul d'une signature.

Le jeton de signature stocké est ensuite transmis si besoin au dispositif auquel le dispositif client délègue la génération de la signature pour le message m, c'est-à-dire au serveur intermédiaire 7 ou au module matériel de sécurité 4

Le dispositif client 2 envoie au serveur intermédiaire 7 ou au module matériel de sécurité 4, le résultat φ(d) du chiffrement par ladite fonction de chiffrement homomorphique φ de la clé privée d stockée. Le dispositif client peut également transmettre le résultat φ(z) du chiffrement par ladite fonction de chiffrement homomorphique φ d'un élément z fonction du message m.

L'élément z fonction du message m utilisé pour le calcul de la signature peut être le résultat de l'application d'une fonction de hachage au message m telle que SHA-2, afin notamment d'obtenir pour la signature une donnée de message z de taille fixe choisie, quel que soit la longueur du message m.

Alternativement, le dispositif client peut transmettre directement le message m. Le serveur intermédiaire ou le module matériel de sécurité peut alors calculer à partir de celui-ci l'élément z et le chiffré φ(z).

Alternativement, le dispositif client peut ne pas détenir le message m. Le serveur intermédiaire ou le module matériel de sécurité peut alors obtenir par lui-même le message m auprès d'une entité extérieure et calculer à partir de celui-ci l'élément z et le chiffré φ(z).

Le serveur intermédiaire 7 ou le module matériel de sécurité 4 génère lors d'une étape de génération de signature 105 ladite signature (r,s) dudit message m

chiffrée à l'aide de ladite fonction de chiffrement homomorphique (φ(r),φ(s)) à partir du résultat φ(d) du chiffrement par ladite fonction de chiffrement homomorphique de la clé privée d stockée par le dispositif client, du jeton de signature (φ(r), φ(1/k)) et du résultat φ(z) du chiffrement par ladite fonction de chiffrement homomorphique φ de l'élément z fonction du message m reçus.

L'élément s est un élément de $\mathbb{Z}_n$ et s'écrit classiquement :

$$s = \left(\frac{1}{k}\right).(z + d.r) \bmod n$$

Dans un premier mode de mise en oeuvre, ce jeton de signature peut comprendre une première partie de jeton de signature. Une telle première partie de jeton de signature notée φ(r) peut être générée en chiffrant l'entier intermédiaire calculé (r) à l'aide de ladite fonction de chiffrement homomorphique φ. Il peut également comprendre une deuxième partie de jeton de signature φ(1/k) générée en chiffrant l'inverse de l'aléa 1/k à l'aide de ladite fonction de chiffrement homomorphique φ.

Dans ce mode de mise en oeuvre, la signature du message m chiffrée à l'aide de ladite fonction de chiffrement homomorphique peut comprendre une première partie de signature chiffrée à l'aide de ladite fonction de chiffrement homomorphique et générée à l'aide de la formule : φ(s) = φ((1/k)*(z+d.r)) et une deuxième partie de signature chiffrée à l'aide de ladite fonction de chiffrement homomorphique égale à φ(r) avec 1/k l'inverse de l'aléa, z fonction du message m, d la clé privée stockée par le dispositif client, r l'entier intermédiaire calculé et φ la fonction de chiffrement homomorphique.

Grâce à la propriété homomorphique de la fonction φ, la première partie de signature chiffrée φ(s) peut être calculée à partir du jeton chiffré φ(1/k),φ(r), de la clé privée chiffrée φ(d) et du message chiffré φ(z) sans avoir à déchiffrer aucun de ces éléments.

Dans un deuxième mode de mise en oeuvre, le jeton de signature comprend en outre le résultat φ(r.1/k) du chiffrement par ladite fonction de chiffrement homomorphique du produit de l'entier intermédiaire calculé avec l'inverse de l'aléa 1/k. Lors de l'étape de génération de signature 105, la première partie de signature chiffrée φ(s) peut alors être générée à l'aide de la formule :

$$\varphi(s) = \varphi((1/k).z + d.(r.1/k))$$

Les seules opérations homomorphiques sur la multiplication à calculer sont alors le calcul de φ((1/k).z) à partir de φ(1/k) et φ(z) et le calcul de φ(d.(r.1/k)) à partir de φ(d) et φ(r.1/k). Le calcul de la signature ne nécessite donc que des multiplications homomorphiques d'ordre 1 et est alors plus léger que dans le mode de mise en oeuvre précédent dans lequel il est nécessaire de calculer une première multiplication d'ordre 1, par exemple φ(d.r) à partir de φ(d) et φ(r), puis une multiplication de second ordre, par exemple φ(1/k.d.r) à partir de φ(1/k) et du résultat du calcul de φ(d.r).

Dans les deux modes de mise en oeuvre, la signature est ainsi obtenue sous forme chiffrée φ(r), φ(s). Elle peut être transmise au dispositif client 2 et/ou au module matériel de sécurité 4 et stockée par celui-ci sous forme chiffrée. Alternativement la signature peut être déchiffrée avant stockage, sous réserve que le dispositif réalisant ce déchiffrement ait connaissance de la clé privée du chiffrement homomorphique skφ permettant de déchiffrer les éléments chiffrés.

En cas de stockage sous forme chiffrée, la signature peut n'être déchiffrée que lors de sa vérification, par exemple avant sa transmission au serveur vérifieur. Dans le cas d'une mise en oeuvre selon l'algorithme DSA ou ECDSA, une telle vérification peut être mise en oeuvre par le serveur vérifieur conformément à l'algorithme DSA ou EDCSA standard de l'état de la technique.

Dans tous les modes de mise en oeuvre, une fois le jeton généré, les éléments ayant servi à sa génération (k, 1/k, $g^k$, r, r.1/k) peuvent être effacés afin de limiter les risques de piratage. Pour des raisons de sécurité le jeton généré ne peut par ailleurs être utilisé qu'une seule fois pour la génération d'une signature.

Les calculs constituant les étapes les plus lourdes du calcul d'une signature peuvent ainsi être réalisés hors ligne à l'avance, sans mettre en cause la sécurité du mécanisme de signature grâce au chiffrement du jeton. L'utilisation d'une fonction homomorphique permet de limiter le cout du calcul d'une signature par un dispositif client en permettant de déléguer des calculs sous forme chiffrée.

**Revendications**

1. Procédé de génération d'une signature d'un message (m) destinée à être validée par un serveur vérifieur (3), le protocole de signature mis en oeuvre pour la génération de la signature comprenant des paramètres publics (Gr, n, g) tels que g est un élément du groupe Gr d'ordre n avec n un entier premier, un dispositif client (2) étant configuré pour détenir, une clé privée (d) et une clé publique (y) correspondante, ledit procédé étant **caractérisé en ce qu'**il comprend des étapes de :

   - calcul (103) préalablement hors ligne par un module matériel de sécurité (4) d'un jeton de signature (φ(r), φ(1/k)) comprenant une première partie de jeton de signature φ(r) et d'une deuxième partie de jeton de signature φ(1/k), dans lequel k est un entier aléatoire compris entre 1 et n-1, et r est un entier intermédiaire défini par r=f($g^k$) où f est une fonction à valeurs dans $\mathbb{Z}_n$, et la première partie de jeton de signature $\varphi(r)$ est générée en chiffrant l'entier intermédiaire r à l'aide d'une fonction de chiffrement homomorphique ($\varphi$) et la deuxième partie de jeton de signature $\varphi(1/k)$ est générée en chiffrant 1/k l'inverse de l'aléa à l'aide de ladite fonction de chiffrement homomorphique ($\varphi$),

- stockage (104) dudit jeton de signature ($\varphi(r)$, $\varphi(1/k)$) ;

- génération (105) de ladite signature (r,s) dudit message (m) chiffrée à l'aide de ladite fonction de chiffrement homomorphique ($\varphi(r)$, $\varphi(s)$) à partir du résultat ($\varphi(d)$) du chiffrement par ladite fonction de chiffrement homomorphique de la clé privée stockée par le dispositif client (d), du jeton de signature ($\varphi(r)$, $\varphi(1/k)$) et dudit message (m), ladite signature étant destinée à être validée par ledit serveur vérifieur (3) à l'aide de ladite clé publique (y).

2. Procédé de génération d'une signature selon la revendication précédente, dans lequel ledit module matériel de sécurité met également en oeuvre préalablement hors ligne des étapes de :

- génération (101) de l'aléa k entier appartenant à [1;n-1] ; et
- calcul (102) de l'entier intermédiaire r.

3. Procédé de génération d'une signature selon l'une des revendications 1 ou 2 dans lequel le protocole de signature est le protocole ECDSA, le groupe Gr est le groupe comprenant l'ensemble des points d'une courbe elliptique muni de l'addition, la clé publique y et la clé privée d vérifient y = d*g, g étant un point de la courbe elliptique d'ordre n, la fonction f associe à un point de la courbe elliptique l'abscisse modulo n dudit point, et l'entier intermédiaire r est l'abscisse du point de la courbe elliptique k*g modulo n.

4. Procédé de génération d'une signature selon l'une des revendications 1 ou 2, dans lequel le protocole de signature est le protocole DSA, le groupe $G_r$ est l'ensemble $\mathbb{Z}_p$ muni de la multiplication, où p est un nombre entier premier tel que (p-1) est un multiple de n, la clé publique y et la clé privée d telle que 0<d<n vérifient y = $g^d$ mod p, g = $h^{((p-1)/n)}$ mod p avec h un entier aléatoire vérifiant 1<h<p-1 et g différent de 1, la fonction f est définie par f(x)=x mod n, et l'entier intermédiaire r est r = ($g^k$ mod p) mod n.

5. Procédé de génération d'une signature selon l'une des revendications précédentes, dans lequel la signature du message m chiffrée à l'aide de ladite fonction de chiffrement homomorphique comprend une première partie de signature chiffrée à l'aide de ladite fonction de chiffrement homomorphique et générée à l'aide de la formule : $\varphi(s) = \varphi((1/k)^*(z+d.r))$ et une deuxième partie de signature chiffrée à l'aide de ladite fonction de chiffrement homomorphique égale à $\varphi(r)$,

avec 1/k l'inverse de l'aléa, z fonction du message m, d la clé privée stockée par le dispositif client, r l'entier intermédiaire et $\varphi$ la fonction de chiffrement homomorphique.

6. Procédé de génération d'une signature selon l'une des revendications précédentes, dans lequel le jeton de signature comprend en outre le résultat $\varphi(r.1/k)$ du chiffrement par ladite fonction de chiffrement homomorphique du produit de l'entier intermédiaire r avec 1/k l'inverse de l'aléa.

7. Procédé de génération d'une signature selon la revendication précédente, dans lequel la signature du message m chiffrée à l'aide de ladite fonction de chiffrement homomorphique comprend une première partie de signature chiffrée à l'aide de ladite fonction de chiffrement homomorphique et générée à l'aide de la formule : $\varphi(s) = \varphi((1/k).z + d.(r.1/k))$ et une deuxième partie de signature chiffrée à l'aide de ladite fonction de chiffrement homomorphique égale à $\varphi(r)$,

avec 1/k l'inverse de l'aléa, z fonction du message m, d la clé privée stockée par le dispositif client, r l'entier intermédiaire, r.1/k le produit de l'entier intermédiaire avec l'inverse de l'aléa et $\varphi$ la fonction de chiffrement homomorphique.

8. Procédé de génération d'une signature d'un message (m) destinée à être validée par un serveur vérifieur (3), un dispositif client (2) étant configuré pour détenir, une clé privée (d) et une clé publique (y) correspondante, dans lequel la clé publique y et la clé privée d vérifient y=d*g, g étant un point d'une courbe elliptique d'ordre n un entier premier,

ledit procédé étant **caractérisé en ce qu'**il comprend des étapes mise en oeuvre préalablement hors ligne par un module matériel de sécurité (4) de :

- génération (101) d'un aléa k entier appartenant à [1, n-1],
- calcul (102) d'un entier intermédiaire r abscisse du point de la courbe elliptique k*g modulo n ;
- calcul (103) d'un jeton de signature ($\varphi(r)$, $\varphi(1/k)$) comprenant une première partie de jeton de signature $\varphi(r)$ générée en chiffrant l'entier intermédiaire r à l'aide d'une fonction de chiffre-ment homomorphique ($\varphi$), et une deuxième par-tie de jeton de signature $\varphi(1/k)$, est générée en chiffrant 1/k l'inverse de l'aléa à l'aide de ladite fonction de chiffrement homomorphique ($\varphi$),

le procédé comprenant en outre la mise en oeuvre des étapes de :

- stockage (104) dudit jeton de signature ($\varphi(r)$, $\varphi(1/k)$) ;
- génération (105) de ladite signature (r,s) dudit message (m) chiffrée à l'aide de ladite fonction de chiffrement homomorphique ($\varphi(r)$, $\varphi(s)$) à partir du résultat ($\varphi(d)$) du chiffrement par ladite fonction de chiffrement homomorphique de la clé privée stockée par le dispositif client (d), du jeton de signature ($\varphi(r)$, $\varphi(1/k)$) et dudit message (m), ladite signature étant destinée à être validée par ledit serveur vérifieur (3) à l'aide de ladite clé publique (y).

9. Procédé de génération d'une signature d'un message (m) destinée à être validée par un serveur vérifieur (3), un dispositif client (2) étant configuré pour détenir, une clé privée (d) et une clé publique (y) correspondante, dans lequel la clé publique (y) et la clé privée d telle que $0<d<n$ vérifient $y=g^d \bmod p$, n étant un nombre premier, p étant un nombre premier vérifiant (p-1) est un multiple de n, $g=h^{((p-1)/n)} \bmod p$ avec h un entier aléatoire vérifiant $1<h<p-1$ et g différent de 1,

ledit procédé étant **caractérisé en ce qu'**il comprend des étapes mise en oeuvre préalablement hors ligne par un module matériel de sécurité (4) de :

- génération (101) d'un aléa k entier appartenant à [1, n-1],
- calcul (102) d'un entier intermédiaire $r=(g^k \bmod p) \bmod n$;
- calcul (103) d'un jeton de signature ($\varphi(r)$, $\varphi(1/k)$) comprenant une première partie de jeton de signature $\varphi(r)$ générée en chiffrant l'entier intermédiaire r à l'aide d'une fonction de chiffrement homomorphique ($\varphi$), et une deuxième partie de jeton de signature $\varphi(1/k)$, est générée en chiffrant 1/k l'inverse de l'aléa à l'aide de ladite fonction de chiffrement homomorphique ($\varphi$),

le procédé comprenant en outre la mise en oeuvre des étapes de :

- stockage (104) dudit jeton de signature ($\varphi(r)$, $\varphi(1/k)$) ;
- génération (105) de ladite signature (r,s) dudit message (m) chiffrée à l'aide de ladite fonction de chiffrement homomorphique ($\varphi(r)$, $\varphi(s)$) à partir du résultat ($\varphi(d)$) du chiffrement par ladite fonction de chiffrement homomorphique de la clé privée stockée par le dispositif client (d), du jeton de signature ($\varphi(r)$, $\varphi(1/k)$) et dudit message (m), ladite signature étant destinée à être validée par ledit serveur vérifieur (3) à l'aide de ladite clé publique (y).

10. Produit programme d'ordinateur comprenant des instructions de code de programme pour l'exécution des étapes du procédé selon l'une quelconque des revendications précédentes lorsque ledit programme est exécuté sur un ordinateur.

11. Système (1) de génération d'une signature d'un message (m) destinée à être validée par un serveur vérifieur (3), le protocole de signature mis en oeuvre pour la génération de la signature comprenant des paramètres publics (Gr, n, g) tels que g est un élément du groupe Gr d'ordre n avec n un entier premier,

un dispositif client (2) étant configuré pour détenir une clé privée (d) et une clé publique (y) correspondante, ledit système comprenant :

- un module matériel de sécurité (4) configuré pour calculer préalablement hors ligne un jeton de signature ($\varphi(r)$,$\varphi(1/k)$) comprenant une première partie $\varphi(r)$ de jeton de signature et d'une deuxième partie $\varphi(1/k)$ de jeton de signature, dans lequel k est un entier aléatoire compris entre 1 et n-1, et r est un entier intermédiaire défini par $r=f(g^k)$ où f est une fonction à valeurs dans $\mathbb{Z}_n$, et la première partie de jeton de signature $\varphi(r)$ est générée en chiffrant l'entier intermédiaire r à l'aide de ladite fonction de chiffrement homomorphique ($\varphi$) et la deuxième partie de jeton de signature $\varphi(1/k)$ générée en chiffrant 1/k l'inverse de l'aléa à l'aide de ladite fonction de chiffrement homomorphique ($\varphi$),
- un dispositif de stockage (8) dudit jeton de signature ($\varphi(r)$,$\varphi(1/k)$),
- un serveur intermédiaire (7) ou ledit module matériel de sécurité (4) configuré pour générer ladite signature (r,s) dudit message (m) chiffrée à l'aide de ladite fonction de chiffrement homomorphique ($\varphi(r)$, $\varphi(s)$) à partir du résultat ($\varphi(d)$) du chiffrement par ladite fonction de chiffrement homomorphique ($\varphi$) de la clé privée stockée par le dispositif client (d), du jeton de signature ($\varphi(r)$, $\varphi(1/k)$) et dudit message (m),
- un serveur vérifieur (3) configuré pour valider ladite signature à l'aide de ladite clé publique (y).

**Patentansprüche**

1. Verfahren zum Erzeugen einer Signatur einer Nachricht (m), die durch einen Prüfserver (3) bestätigt werden soll, wobei das für die Erzeugung der Signatur verwendete Protokoll öffentliche Parameter (Gr, n, g) umfasst, so dass g ein Element der Gruppe Gr der Ordnung n mit n als erster ganzer Zahl ist, eine Client-Vorrichtung (2) so konfiguriert ist, dass sie einen privaten Schlüssel (d) und einen entsprechenden öffentlichen Schlüssel (y) enthält, wobei das Verfahren **dadurch gekennzeichnet ist, dass** es die folgenden Schritte umfasst:

- vorher offline erfolgtes Berechnen (103) eines Signatur-Tokens ($\varphi(r)$, $\varphi(1/k)$) durch ein Hardware-Sicherheitsmodul (4), das einen ersten Teil eines Signatur-Tokens $\varphi(r)$ und einen zweiten Teil eines Signatur-Tokens $\varphi(1/k)$ umfasst, wobei k eine zufällige ganze Zahl zwischen 1 und n-1 ist und r eine durch $r=f(g^k)$ definierte Zwischenganzzahl ist, wobei f eine Funktion mit Werten in $\mathbb{Z}_n$ ist und der erste Teil des Signatur-Tokens $\varphi(r)$ durch Verschlüsselung der Zwischenganzzahl r mit Hilfe einer homomorphen Verschlüsselungsfunktion ($\varphi$) erzeugt wird, und der zweite Teil des Signatur-Tokens $\varphi(1/k)$ durch Verschlüsselung von 1/k der Umkehrung des Zufalls mit Hilfe der homomorphen Verschlüsselungsfunktion ($\varphi$) erzeugt wird,
- Speichern (104) des Signatur-Tokens ($\varphi(r)$, $\varphi(1/k)$) ;
- Erzeugen (105) der Signatur (r, s) der Nachricht (m), die mit Hilfe der homomorphen Verschlüsselungsfunktion ($\varphi(r)$, $\varphi(s)$) aus dem Ergebnis ($\varphi(d)$) der Verschlüsselung des privaten Schlüssels durch die homomorphe Verschlüsselungsfunktion verschlüsselt wurde, der von der Client-Vorrichtung (d) gespeichert wird, sowie des Signatur-Tokens ($\varphi(r)$ , $\varphi(1/k)$) und der Nachricht (m), wobei die Signatur dazu bestimmt ist, durch den Prüfserver (3) unter Verwendung des öffentlichen Schlüssels (y) bestätigt zu werden.

2. Verfahren zum Erzeugen einer Signatur nach dem vorstehenden Anspruch, wobei das Hardware-Sicherheitsmodul ebenfalls zunächst offline die folgenden Schritte einsetzt:

- Erzeugen (101) der zu [1; n-1] gehörenden zufälligen ganzen Zahl k; und
- Berechnen (102) der Zwischenganzzahl r.

3. Verfahren zum Erzeugen einer Signatur nach einem der Ansprüche 1 oder 2, wobei das Signaturprotokoll das ECDSA-Protokoll ist, die Gruppe Gr die Gruppe ist, die alle Punkte einer elliptischen Kurve umfasst, die mit der Addition versehen ist, der öffentliche Schlüssel y und der private Schlüssel d prüfen, ob y = d*g, wobei g ein Punkt der elliptischen Kurve der Ordnung n ist, die Funktion f einem Punkt der elliptischen Kurve die Abszisse modulo n des Punktes zuordnet, und die Zwischenganzzahl r die Abszisse des Punktes der elliptischen Kurve k*g modulo n ist.

4. Verfahren zum Erzeugen einer Signatur nach einem der Ansprüche 1 oder 2, wobei das Signaturprotokoll das DSA-Protokoll ist, die Gruppe Gr die Menge $\mathbb{Z}_p$ versehen mit der Multiplikation ist, wobei p eine ganze Primzahl ist, wie (p-1) ein Vielfaches von n ist, der öffentliche Schlüssel y und der private Schlüssel d wie 0<d<n prüfen, ob y = $g^d$ mod p, g = $h^{((p-1)/n)}$ mod p mit h einer zufälligen ganzen Zahl, die 1<h<p-1 prüft, und g verschieden von 1 ist, die Funktion f durch f(x)=x mod n definiert ist, und die Zwischenganzzahl r r = ($g^k$ mod p) mod n ist.

5. Verfahren zum Erzeugen einer Signatur nach einem der vorstehenden Ansprüche, wobei die Signatur der mit Hilfe der homomorphen Verschlüsselungsfunktion verschlüsselten Nachricht m einen ersten Teil der mit Hilfe der homomorphen Verschlüsselungsfunktion verschlüsselten und mit der Formel: $\varphi(s)$ = $\varphi((1/k)*(z+d.r))$ erzeugten Signatur umfasst, und einen zweiten Teil der mit Hilfe der homomorphen Verschlüsselungsfunktion gleich $\varphi(r)$ verschlüsselten Signatur, mit 1/k die Umkehrung der zufälligen Zahl, z die Funktion der Nachricht m, d den von der Client-Vorrichtung gespeicherten privaten Schlüssel, r die Zwischenganzzahl und $\varphi$ als homomorphe Verschlüsselungsfunktion.

6. Verfahren zum Erzeugen einer Signatur nach einem der vorstehenden Ansprüche, wobei das Signatur-token ferner das Ergebnis $\varphi(r.1/k)$ der Verschlüsselung durch die homomorphe Verschlüsselungsfunktion des Produkts der Zwischenganzzahl r mit 1/k die Umkehrung der zufälligen Zahl umfasst.

7. Verfahren zum Erzeugen einer Signatur nach dem vorstehenden Anspruch, wobei die Signatur der mit Hilfe der homomorphen Verschlüsselungsfunktion verschlüsselten Nachricht m einen ersten Teil der mit Hilfe der homomorphen Verschlüsselungsfunktion verschlüsselten und mit der Formel: $\varphi(s)$ = $\varphi((1/k).z + d. (r. 1/k))$ erzeugten Signatur und einen zweiten Teil der mit Hilfe der homomorphen Verschlüsselungsfunktion gleich $\varphi(r)$ verschlüsselten Signatur umfasst, mit 1/k die Umkehrung der zufälligen Zahl, z die Funktion der Nachricht m, d den von der Client-Vorrichtung gespeicherten privaten Schlüssel, r die Zwischenganzzahl, r.1/k das Produkt der Zwischenganzzahl mit der Umkehrung der zufälligen Zahl und $\varphi$ als homomorphe Verschlüsselungsfunktion.

8. Verfahren zum Erzeugen einer Signatur einer Nachricht (m), die dazu bestimmt ist, durch einen Prüfserver (3) bestätigt zu werden, wobei eine Client-Vorrichtung (2) so konfiguriert ist, dass sie einen privaten Schlüssel (d) und einen entsprechenden öffentlichen Schlüssel (y) enthält, wobei der öffentliche Schlüssel y und der private Schlüssel d y=d*g prüfen, wobei g ein Punkt einer elliptischen Kurve der Ordnung n als erster ganzer Zahl ist,

wobei das Verfahren **dadurch gekennzeichnet ist, dass** es die vorher durch ein Hardware-Sicherheitsmodul (4) offline eingesetzten folgenden Schritte umfasst:

> - Erzeugen (101) einer zu [1, n-1] gehörenden zufälligen ganzen Zahl k,
> - Berechnen (102) einer Zwischenganzzahl r als Abszisse des Punktes der elliptischen Kurve k*g modulo n;
> - Berechnen (103) eines Signatur-Tokens ($\varphi(r)$, $\varphi(1/k)$), das einen ersten Teil eines Signatur-Tokens ($\varphi(r)$ umfasst, der erzeugt wird, indem die Zwischenganzzahl r mit Hilfe einer homomorphen Verschlüsselungsfunktion ($\varphi$) verschlüsselt wird, und ein zweiter Teil eines Signatur-Tokens $\varphi(1/k)$ wird erzeugt, indem 1/k die Umkehrung der zufälligen Zahl mit Hilfe der homomorphen Verschlüsselungsfunktion ($\varphi$) verschlüsselt wird, wobei das Verfahren ferner den Einsatz folgender Schritte umfasst:
> - Speichern (104) des Signatur-Tokens ($\varphi(r)$, $\varphi(1/k)$) ;
> - Erzeugen (105) der Signatur (r, s) der Nachricht (m), die mit Hilfe der homomorphen Verschlüsselungsfunktion ($\varphi(r)$, $\varphi(s)$) aus dem Ergebnis ($\varphi(d)$) der Verschlüsselung des privaten Schlüssels durch die homomorphe Verschlüsselungsfunktion verschlüsselt wurde, der von der Client-Vorrichtung (d) gespeichert wird, sowie des Signatur-Tokens ($\varphi(r)$, $\varphi(1/k)$) und der Nachricht (m), wobei die Signatur dazu bestimmt ist, durch den Prüfserver (3) mit Hilfe des öffentlichen Schlüssels (y) bestätigt zu werden.

9. Verfahren zum Erzeugen einer Signatur einer Nachricht (m), die dazu bestimmt ist, durch einen Prüfserver (3) bestätigt zu werden, wobei eine Client-Vorrichtung (2) so konfiguriert ist, dass sie einen privaten Schlüssel (d) und einen entsprechenden öffentlichen Schlüssel (y) enthält, wobei der öffentliche Schlüssel (y) und der private Schlüssel d wie 0<d<n y=$g^d$ mod p prüfen, n eine Primzahl ist, p eine Primzahl ist, die prüft, ob (p-1) ein Vielfaches von n ist, g=$h^{((p-1)/n)}$ mod p mit h eine zufällige ganze Zahl ist, die 1 <h<p-1 prüft, und g unterschiedlich von 1 ist, wobei das Verfahren **dadurch gekennzeichnet ist, dass** es die vorher durch ein Hardware-Sicherheitsmodul (4) offline eingesetzten folgenden Schritte umfasst:

> - Erzeugen (101) einer zu [1, n-1] gehörenden zufälligen ganzen Zahl k,
> - Berechnen (102) einer Zwischenganzzahl r = ($g^k$ mod p) mod n;

- Berechnen (103) eines Signatur-Tokens ($\varphi(r)$, $\varphi(1/k)$), das einen ersten Teil eines Signatur-Tokens ($\varphi(r)$ umfasst, der erzeugt wird, indem die Zwischenganzzahl r mit Hilfe einer homomorphen Verschlüsselungsfunktion ($\varphi$) verschlüsselt wird, und ein zweiter Teil eines Signatur-Tokens $\varphi(1/k)$ wird erzeugt, indem 1/k die Umkehrung der zufälligen Zahl mit Hilfe der homomorphen Verschlüsselungsfunktion ($\varphi$) verschlüsselt wird,

wobei das Verfahren ferner den Einsatz folgender Schritte umfasst:

> - Speichern (104) des Signatur-Tokens ($\varphi(r)$, $\varphi(1/k)$) ;
> - Erzeugen (105) der Signatur (r, s) der Nachricht (m), die mit Hilfe der homomorphen Verschlüsselungsfunktion ($\varphi(r)$, $\varphi(s)$) aus dem Ergebnis ($\varphi(d)$) der Verschlüsselung des privaten Schlüssels durch die homomorphe Verschlüsselungsfunktion verschlüsselt wurde, der von der Client-Vorrichtung (d) gespeichert wird, sowie des Signatur-Tokens ($\varphi(r)$ , $\varphi(1/k)$) und der Nachricht (m), wobei die Signatur dazu bestimmt ist, durch den Prüfserver (3) mit Hilfe des öffentlichen Schlüssels (y) bestätigt zu werden.

10. Rechnerprogramm-Produkt mit Programmcode-Anweisungen zum Durchführen der Verfahrensschritte nach einem der vorstehenden Ansprüche, wenn das Programm auf einem Computer läuft.

11. System zum Erzeugen einer Signatur einer Nachricht (m), die durch einen Prüfserver (3) bestätigt werden soll, wobei das für die Erzeugung der Signatur verwendete Protokoll öffentliche Parameter (Gr, n, g) umfasst, so dass g ein Element der Gruppe Gr der Ordnung n mit n als erster ganzer Zahl ist, eine Client-Vorrichtung (2) so konfiguriert ist, dass sie einen privaten Schlüssel (d) und einen entsprechenden öffentlichen Schlüssel (y) enthält, und das System Folgendes umfasst:

> - ein Hardware-Sicherheitsmodul (4), das so konfiguriert ist, dass es vorher offline ein SignaturToken ($\varphi(r)$, $\varphi(1/k)$) berechnet, das einen ersten Teil $\varphi(r)$ eines Signatur-Tokens umfasst, und einen zweiten Teil $\varphi(1/k)$ eines Signatur-Tokens, wobei k eine zufällige ganze Zahl zwischen 1 und n-1 ist und r eine durch r=f($g^k$) definierte Zwischenganzzahl ist, wobei f eine Funktion mit Werten in $\mathbb{Z}_n$ ist, und der erste Teil des Signatur-Tokens $\varphi(r)$ durch Verschlüsselung der Zwischenganzzahl r mit Hilfe einer homomorphen Verschlüsselungsfunktion ($\varphi$) erzeugt wird, und der zweite Teil des Signatur-

Tokens φ(1/k) durch Verschlüsselung von 1/k der Umkehrung der Zufallszahl mit Hilfe der homomorphen Verschlüsselungsfunktion (φ) erzeugt wird,
- eine Vorrichtung zum Speichern (8) des Signatur-Tokens (φ(r), φ(1/k)),
- einen Zwischenserver (7) oder das Hardware-Sicherheitsmodul (4) das so konfiguriert ist, dass es die Signatur (r, s) der Nachricht (m) erzeugt, die mit Hilfe der homomorphen Verschlüsselungsfunktion (φ(r), φ(s)) aus dem Ergebnis (φ(d)) der Verschlüsselung des privaten Schlüssels durch die homomorphe Verschlüsselungsfunktion (φ) des privaten Schlüssels verschlüsselt wurde, der von der Client-Vorrichtung (d), des Signatur-Tokens (φ(r), φ(1/k)) und der Nachricht (m) gespeichert wurde,
- einen Prüfserver (3), der so konfiguriert ist, dass die Signatur mit Hilfe des öffentlichen Schlüssels (y) bestätigt wird.

## Claims

1. A method for generating a signature of a message (m) intended to be validated by a verifier server (3), the signature protocol implemented for generating the signature comprising public parameters (Gr, n, g) such that g is an element of the group Gr of the order n with n a prime integer, a client device (2) being configured to hold a private key (d) and a corresponding public key (y), said method being **characterized in that** it comprises steps of:

   - offline beforehand computation (103) by a hardware security module (4) of a signature token (φ(r), φ(1/k)) comprising a first part of signature token φ(r) and a second part of signature token φ(1/k), wherein k is a random integer comprised between 1 and n-1, and r is an intermediate integer defined by r=f($g^k$) where f is a function having values in $\mathbb{Z}_n$, and the first part of signature token φ(r) is generated by encrypting the intermediate integer r by means of a homomorphic encryption function (φ) and the second part of signature token φ(1/k) is generated by encrypting 1/k the inverse of the random by means of said homomorphic encryption function (φ),
   - storage (104) of said signature token (φ(r), φ(1/k)) ;
   - generation (105) of said signature (r,s) of said message (m) encrypted by means of said homomorphic encryption function (φ(r), φ(s)) from the result (φ(d)) of the encryption by said homomorphic encryption function of the private key stored by the client device (d), of the signature token (φ(r), φ(1/k)) and of said message (m), said signature being intended to be validated by said verifier server (3) by means of said public key (y).

2. The method for generating a signature according to the preceding claim, wherein said hardware security module also previously offline implements steps of:

   - generation (101) of the random k as integer belonging to [1;n-1]; and
   - computation (102) of the intermediate integer r.

3. The method for generating a signature according to one of claims 1 or 2 wherein the signature protocol is the ECDSA protocol, the group Gr is the group comprising all the points of an elliptic curve provided with addition, the public key y and the private key d verify y = d*g, g being a point of the elliptic curve of the order n, the function f associates with a point of the elliptic curve the abscissa modulo n of said point, and the intermediate integer r is the abscissa of the point of the elliptic curve k*g modulo n.

4. The method for generating a signature according to one of claims 1 or 2, wherein the signature protocol is the DSA protocol, the group $G_r$ is the set $\mathbb{Z}_p$ provided with multiplication, where p is a prime integer number such that (p-1) is a multiple of n, the public key y and the private key d such that 0<d<n verify y = $g^d$ mod p, g = $h^{((p-1)/n)}$ mod p with h a random integer verifying 1<h<p-1 and g different to 1, the function f is defined by f(x)=x mod n, and the intermediate integer r is r = ($g^k$ mod p) mod n.

5. The method for generating a signature according to one of the preceding claims, wherein the signature of the message m encrypted by means of said homomorphic encryption function comprises a first part of signature encrypted by means of said homomorphic encryption function and generated by means of the formula: φ(s) = φ((1/k)*(z+d.r)) and a second part of signature encrypted by means of said homomorphic encryption function equal to φ(r), with 1/k the inverse of the random, z function of the message m, d the private key stored by the client device, r the intermediate integer and φ the homomorphic encryption function.

6. The method for generating a signature according to one of the preceding claims, wherein the signature token further comprises the result φ(r.1/k) of the encryption by said homomorphic encryption function of the product of the intermediate integer r with the inverse of the random 1/k.

7. The method for generating a signature according to the preceding claim, wherein the signature of the message m encrypted by means of said homomorphic encryption function comprises a first part of signature encrypted by means of said homomorphic encryption function and generated by means of the formula: $\varphi(s) = \varphi((1/k).z + d.(r.1/k))$ and a second part of signature encrypted by means of said homomorphic encryption function equal to $\varphi(r)$,
with 1/k the inverse of the random, z function of the message m, d the private key stored by the client device, r the intermediate integer, r.1/k the product of the intermediate integer with the inverse of the random and $\varphi$ the homomorphic encryption function.

8. A method for generating a signature of a message (m) intended to be validated by a verifier server (3), a client device (2) being configured to hold a private key (d) and a corresponding public key (y) wherein the public key y and the private key d verify y=d*g, g being a point of an elliptic curve of the order n, a prime integer,
said method being **characterized in that** it comprises steps implemented previously offline by a hardware security module (4) of:

- generation (101) of a random k as integer belonging to [1, n-1],
- computation (102) of an intermediate integer r as abscissa of the point of the elliptic curve k*g modulo n;
- computation (103) of a signature token ($\varphi(r)$, $\varphi(1/k)$) comprising a first part of signature token $\varphi(r)$ generated by encrypting the intermediate integer r by means of a homomorphic encryption function ($\varphi$), and a second part of signature token $\varphi(1/k)$, generated by encrypting 1/k the inverse of the random by means of said homomorphic encryption function ($\varphi$),

the method further comprising implementing the steps of:

- storage (104) of said signature token ($\varphi(r)$, $\varphi(1/k)$);
- generation (105) of said signature (r,s) of said message (m) encrypted by means of said homomorphic encryption function ($\varphi(r)$, $\varphi(s)$) from the result ($\varphi(d)$) of the encryption by said homomorphic encryption function of the private key stored by the client device (d), of the signature token ($\varphi(r)$, $\varphi(1/k)$) and of said message (m), said signature being intended to be validated by said verifier server (3) by means of said public key (y).

9. A method for generating a signature of a message (m) intended to be validated by a verifier server (3), a client device (2) being configured to hold a private key (d) and a corresponding public key (y), wherein the public key (y) and the private key d such that 0<d<n verify y=g$^d$ mod p, n being a prime number, p being a prime number verifying (p-1) is a multiple of n, g=h$^{((p-1)/n)}$ mod p with h a random integer verifying 1<h<p-1 and g different to 1,
said method being **characterized in that** it comprises steps implemented previously offline by a hardware security module (4) of:

- generation (101) of a random k as integer belonging to [1, n-1],
- computation (102) of an intermediate integer r=(g$^k$ mod p) mod n;
- computation (103) of a signature token ($\varphi(r)$, $\varphi(1/k)$) comprising a first part of signature token $\varphi(r)$ generated by encrypting the intermediate integer r by means of a homomorphic encryption function ($\varphi$), and a second part of signature token $\varphi(1/k)$, generated by encrypting 1/k the inverse of the random by means of said homomorphic encryption function ($\varphi$),

the method further comprising implementing the steps of:

- storage (104) of said signature token ($\varphi(r)$, $\varphi(1/k)$);
- generation (105) of said signature (r,s) of said message (m) encrypted by means of said homomorphic encryption function ($\varphi(r)$, $\varphi(s)$) from the result ($\varphi(d)$) of the encryption by said homomorphic encryption function of the private key stored by the client device (d), of the signature token ($\varphi(r)$, $\varphi(1/k)$) and of said message (m), said signature being intended to be validated by said verifier server (3) by means of said public key (y).

10. A computer program product comprising program code instructions for executing the steps of the method according to one of the preceding claims when said program is executed on a computer.

11. A system (1) for generating a signature of a message (m) intended to be validated by a verifier server (3), the signature protocol implemented for generating the signature comprising public parameters (Gr, n, g) such that g is an element of the group Gr of the order n with n a prime integer,
a client device (2) being configured to hold a private key (d) and a corresponding public key (y), said system comprising:

- a hardware security module (4) configured to compute beforehand, offline, a signature token ($\varphi(r)$,$\varphi(1/k)$) comprising a first part $\varphi(r)$ of signa-

ture token and a second part $\varphi(1/k)$ of signature token, wherein k is a random integer comprised between 1 and n-1, and r is an intermediate integer defined by $r=f(g^k)$ where f is a function having values in $\mathbb{Z}_n$, and the first part of signature token $\varphi(r)$ is generated by encrypting the intermediate integer r by means of said homomorphic encryption function ($\varphi$) and the second part of signature token $\varphi(1/k)$ generated by encrypting 1/k the inverse of the random by means of said homomorphic encryption function ($\varphi$),
- a storage device (8) of said signature token ($\varphi(r)$, $\varphi(1/k)$),
- an intermediate server (7) or said hardware security module (4) configured to generate said signature (r,s) of said message (m) encrypted by means of said homomorphic encryption function ($\varphi(r)$, $\varphi(s)$) from the result ($\varphi(d)$) of the encryption by said homomorphic encryption function ($\varphi$) of the private key stored by the client device (d), of the signature token ($\varphi(r)$, $\varphi(1/k)$) and of said message (m),
- a verifier server (3) configured to validate said signature by means of said public key (y).

**FIG. 1**

101 — Génération d'aléa k

102 — Calcul de l'entier intermédiaire r

103 — Calcul de jeton de signature ($\varphi(r)$, $\varphi(1/k)$)

104 — Stockage de jeton de signature ($\varphi(r)$, $\varphi(1/k)$)

105 — Génération de signature (r,s)

**FIG. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0807908 A2

**Littérature non-brevet citée dans la description**

- New signature schemes with coupons and tight reduction. **BENOIT CHEVALLIER-MAMES.** Applied Cryptography and Network Security - ACNS 2005, volume 3531, Lecture Notes in Computer Science. Springer-Verlag, 2005, vol. 3531, 513-528
- Non-interactive Verifiable Computing: Outsorucing Computation to Untrusted Workers. **GENNARO et al.** Correct System Design. Springer International Publishing, 15 Août 2010, 465-482
- **HANKERSON et al.** Guide to Elliptic Curve Cryptography. Springer, 01 Janvier 2044, 1-332
- **PASCAL PAILLIER.** Public-key cryptosystems based on composite degree residuosity classes. *EUROCRYPT,* 1999, 223-238

- **CATALANO ; FIORE.** Boosting linearly-homomorphic encryption to evaluate degree-2 functions on encrypted data. *Cryptology ePrint Archive,* 2014, 813
- **ZVIKA BRAKERSKI ; VINOD VAIKUNTANATHAN.** *Fully Homomorphic Encryption from Ring-LWE and Security for Key Dependent Messages*
- **ZVIKA BRAKERSKI ; CRAIG GENTRY ; VINOD VAIKUNTANATHAN.** Leveled) fully homomorphic encryption without bootstrapping. *ITCS,* 2012, 309-325